Europäisches Patentamt

European Patent Office

Office européen des brevets

(11) Publication number: **0 381 067**
**A2**

## (12) EUROPEAN PATENT APPLICATION

(21) Application number: **90101560.2**

(51) Int. Cl.⁵: **G06F 15/70**

(22) Date of filing: **26.01.90**

(30) Priority: **31.01.89 US 304943**

(43) Date of publication of application:
**08.08.90 Bulletin 90/32**

(84) Designated Contracting States:
**DE FR GB IT NL**

(71) Applicant: **SCHLUMBERGER TECHNOLOGIES, INC.**
**2707 Orchard Parkway**
**San Jose, CA 95125-2070(US)**

(72) Inventor: **Nishihara, H. Keith**

**1468 Richardson Avenue**
**Los Altos, California 94022(US)**
Inventor: **Hunt, Neil D.**
**450 Anza Street**
**Mountain View, California 94301(US)**
Inventor: **Crossley, P. Anthony**
**222A Sailmaster**
**Austin, Texas 78734(US)**

(74) Representative: **Sparing Röhl Henseler**
**Patentanwälte European Patent Attorneys**
**Rethelstrasse 123**
**D-4000 Düsseldorf 1(DE)**

(54) **A method for registration of CAD model to video images with added clutter.**

(57) A technique for position-finding on a manufactured device such as an integrated circuit ("IC") or a printed circuit board ("PCB"), relating the observed image to a description such as the CAD database that was used to create the devices. The technique contemplates providing an optical image of the surface of the device, obtained with an imaging device such as a video camera and a microscope, generating a synthetic CAD image from the CAD database, subjecting both images to a filtering operation (Laplacian of Gaussian convolution), binarizing (taking the sign of) the results, and correlating the two filtered and binarized images (referred to as "processed" images) to determine relative alignment. One application of the invention is to allow precision positioning of a positioning head relative to a workpiece such as placing an IC device (12) on a PCB (15). A positioning head (17) to which a camera (22) is mounted is driven to the approximate location of the IC site by a positioning mechanism. The positioning mechanism need not be accurate for large increments of travel, but must be capable of providing small relative displacements with high precision. The camera image of the area near the IC site on the PCB is filtered and binarized, and correlated with a processed CAD image of the region surrounding the IC site. This establishes the actual position of the camera (and therefore the positioning head). The positioning head is then moved by the indicated amount.

FIG._20.

# A METHOD FOR REGISTRATION OF CAD MODEL TO VIDEO IMAGES WITH ADDED CLUTTER

## BACKGROUND OF THE INVENTION

Image matching has its roots in research on binocular stereo, where correspondences between a pair of images must be found to compute range from parallax. Two principal approaches have been followed in prior research to solve the stereo correspondence problem--area correlation techniques applied to intensity images, and symbolic feature matching techniques.

Intensity based area-correlation techniques have been the principal technique used for commercial applications in stereo-photogrammetry. A principal advantage of area-correlation is its simplicity. This makes modelling and interpreting the behavior of such a system easier and it also makes high performance implementations practical. Intensity correlation, however, has several drawbacks. In particular, the correlation is sensitive to absolute intensity levels, which means that correlation levels cannot be used directly as a confidence measure. Furthermore, intensity gradients in the images give rise to gradients in the correlation surface which can bias peak locations and in severe cases can completely mask the true correlation peak.

Nishihara developed an area correlation algorithm that avoided these pitfalls by applying the correlation to a binary representation. This idea was derived from research on symbolic feature matching approaches. His sign correlation approach gives essentially the same results as earlier approaches when noise levels are low, but its behavior differs significantly at high noise levels where it continues to give a defined match. This is reported at H.K. Nishihara, "Practical Real Time Imaging Stereo Matcher," Opt. Eng., vol. 23, no. 5, pp 536-545 (1984).

The problem of measuring binocular disparity between a stereo pair of images would seem to relate to the problem of registering an image to a CAD model. In the former case, relative position disparities are measured between corresponding regions in the stereo pair. In the latter, the objective is to measure the translation disparity between an image of a real device and a synthetic image generated from the CAD data used to make the device. Indeed, attempts have been made to apply certain of the binocular stereo techniques outlined above to the CAD registration problem.

However, the CAD problem differs from the stereo problem in a very significant way. The two stereo images are qualitatively the same, and tend to contain the same level of information. Put colloquially, they are both apples. The actual image of a device, and the synthetic binary image of the database used to make the device, are very different. The device image contains geometrical and optical artifacts that tend to mask the structure; furthermore the device image contains additional information such as other visible layers in an integrated circuit ("IC") chip. Following the agricultural analogy, the device image is an apple and the CAD image is an orange.

A typical approach to addressing this problem has been to model the geometric and optical effects and create a synthetic image that incorporates some of the real world effects. Following the above analogy, the approach entails transforming the CAD orange to a simulated apple. The problem of image matching then seems to reduce to the stereo situation of matching two apples. However, the physical phenomena that make the device image what it is tend to be difficult, impossible, or computationally expensive to model realistically.

## SUMMARY OF THE INVENTION

The present invention provides a simple technique for position-finding on a manufactured device such as an integrated circuit ("IC") or a printed circuit board ("PCB"), relating the observed image to a description such as the CAD database that was used to create the devices. The technique requires few adjustments and provides useful results, even in the presence of large amounts of noise or other features present in the image but not represented in the database.

The invention contemplates providing an optical image of the surface of the device, obtained with an imaging device such as a video camera and a microscope, generating a synthetic CAD image from the CAD database, subjecting both images to a filtering operation (Laplacian of Gaussian convolution), binarizing (taking the sign of) the results, and correlating the two filtered and binarized images (referred to as "processed" images) to determine relative alignment. Closing the loop on the analogy discussed above, the invention extracts the common structure by transforming both images to billiard balls before trying to match them.

One application of the invention is to allow precision positioning of a positioning head relative to a workpiece. An example would be placing an IC device on a PCB. A positioning head to which a camera is mounted is driven to the approximate location of the IC site by a positioning mechanism. The positioning mechanism need not be accurate for large increments of travel, but must be capable of providing small relative displacements with high precision. The camera image of the area near the IC site on the PCB is filtered and binarized, and correlated with a processed CAD image of the region surrounding IC site. This establishes the actual position of the camera (and therefore the positioning head). The positioning head is then moved by the indicated amount. The invention thus relieves the need for a positioning mechanism having long-range accuracy.

Another application of the invention is to measure the relative alignment of parts of a structure that are independently placed. A first example is measuring the alignment of metal layers on an IC chip. The method includes the steps of: obtaining an optical image of the surface of the chip, showing both layers of metal (and features of several other layers as well); generating CAD images of the metal-1 and metal-2 layers; filtering and binarizing the three images; determining the alignment between the processed CAD image for the metal-1 layer and the processed optical image; repeating for the metal-2 layer; and comparing these alignment results to obtain an indication of whether the metal-1 and metal-2 layers have been placed in correct alignment on the surface of the chip. A second example is measuring the alignment of a surface mounted IC device relative to the PCB traces. This method includes the steps of: obtaining an optical image of the PCB including the part in question; generating a synthetic CAD image for the PCB in the vicinity of the part; filtering and binarizing the two images; determining the alignment between the processed CAD image for the PCB and the processed optical image; calculating from this alignment the exact location (in pixel coordinates) at which the IC device should be located based upon the positions of the PCB traces in the optical image; and determining the location of the IC device to ascertain whether the device is located in the proper position relative to the board traces.

The method is relatively insensitive to noise, thereby allowing the synthetic images generated for use as templates to be rather simple. It is not necessary to take account of all imaging effects as long as some fraction of the contrast edges are in the correct position. In particular, it is not necessary to model the exact set of features in the observed image; the model can contain more details than the observed image, or the observed image can contain features which are not modeled in the synthetic image.

A further understanding of the nature and advantages of the present invention may be realized by reference to the remaining portions of the specification and to the attached drawings.

## BRIEF DESCRIPTION OF THE DRAWINGS

Fig. 1A shows a random dot pattern;
Fig. 1B shows the pattern resulting from filtering the pattern of Fig. 1A and taking the sign;
Fig. 1C is a plot of the autocorrelation function of the pattern of Fig. 1B;
Figs. 2A-B show a random dot pattern and a noisy version thereof;
Figs. 2C-D show the patterns resulting from filtering the patterns of Figs. 2A-B and taking the sign;
Fig. 2E shows the locations where the patterns of Figs. 2C-D differ;
Fig. 2F is a plot of the cross correlation between the patterns of Figs 2C-D;
Fig. 3 is a simplified side view of apparatus for positioning an IC on a PCB;
Figs. 4A-B are schematically drawn images of a target portion of the PCB before and after fine positioning;
Figs. 5A-B show the real and synthetic images for a local region of a printed circuit board ("PCB");
Figs. 6A-B show the results of filtering the images of Figs. 5A-B and taking the sign;
Fig. 7 shows the measured position errors at 36 placement sites (four rows of nine) on the PCB;
Figs. 8A-D show the measured x error as a function of x coordinate for each of the four rows;
Figs. 9A-D show the measured y error as a function of x coordinate for each of the four rows;
Figs. 10A-B are synthetic images of two IC metal layers as described in the CAD database;
Fig. 11 is an optical image of a physical IC having the metal layers specified by the CAD database;
Figs. 12A-B show the results of filtering the synthetic images of Figs. 10A-B and taking the sign;
Fig. 13 shows the result of filtering the optical image of Fig. 11 and taking the sign;
Figs. 14A-B are plots of the correlation between the filtered, binarized synthetic images of Fig. 12A-B and the filtered binarized optical image of Fig. 13;

Fig. 15 is a block diagram of the overall electronics hardware configuration;

Fig. 16 is a block diagram of a circuit for calculating the Laplacian;

Fig. 17 is a block diagram of a 3-element binomial filter;

Fig. 18 is a block diagram of a 7-by-7 binomial filter;

Fig. 19 is a block diagram of a 22-by-22 approximation to a Laplacian of Gaussian; and

Fig. 20 is a block diagram of a hardware correlator.

## DESCRIPTION OF THE PREFERRED EMBODIMENT

### Form of the Autocorrelation Surface

The two-dimensional autocorrelation function $R_s(\tau)$ of the $\nabla^2 G$ convolution sign representation has the following form for white noise images (which is approximately correct for the images discussed below):

$$R_s(\tau) = (2/\pi)\sin^{-1}(R_c(\tau)/R_c(0)) \qquad (1)$$

where $R_c(\tau)$ is the autocorrelation function of the $\nabla^2 G$ convolution prior to binarization. For a white noise image, it has the form:

$$R_s(\tau) = k (1 - (4\tau^2/w^2) + (2\tau^4/w^4)) \exp(-2\tau^2/w^2) \qquad (2)$$

where k is a constant and w is the diameter of the center of the $\nabla^2 G$ operator, which can be written in polar coordinates as:

$$\nabla^2 G = (1 - (4r^2/w^2)) \exp(-4r^2/w^2) \qquad (3)$$

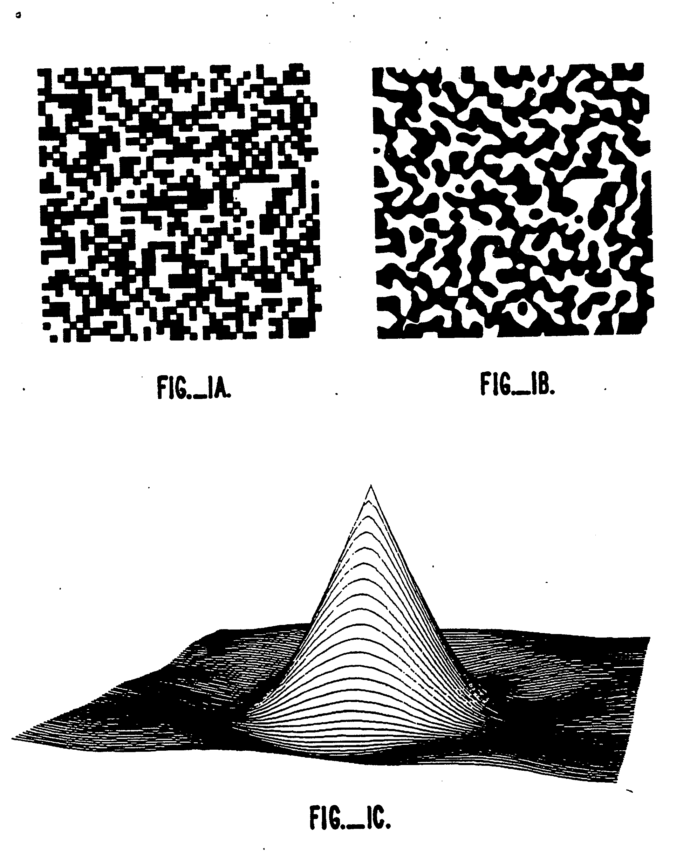

Figs. 1A-C demonstrate pictorially the properties of the operation. The two-dimensional autocorrelation surface, $R_s(\tau)$, is measured empirically by filtering the random dot pattern shown in Fig. 1A with a $\nabla^2 G$ operator which has a center diameter (w) that is 2.3 times the dot size. Fig. 1B shows the sign of the result. The autocorrelation of this binary pattern is then measured to produce the surface plotted in Fig. 1C. The independent axes of this perspective plot are horizontal and vertical disparity.

$R_s(\tau)$ exhibits several valuable characteristics. First, because the convolution sign is a binary representation, the correlation peak is automatically normalized to 1 independent of image contrast. This means that peak height can be used as a direct measure of the noise present between the correlated image patches. The peak is pointed and has a near linear roll-off with distance down to zero correlation. This gives the two-dimensional correlation surface the shape of an inverted cone. Finally, the correlation peak is relatively wide at its base with a width of approximately the center diameter (w) of the $\nabla^2 G$ operator, which aids sub-pixel interpolation of the peak position. The empirical measurement is a close fit to Equation 1 above.

A better model for real images is pink noise which is like white noise filtered so that its power spectrum has a roll-off following:

$$P(f) = (f^2 + f_0^2)^{-3/2} \qquad (4)$$

where $f_0$ is a constant. The principal effect of this change on the above results is a slight broadening of the correlation peak.

Another important factor in the CAD registration problem is the low signal to noise ratio caused by the difficulty of estimating edge contrasts and from other difficult to model effects such as specularities and interference fringes. In many applications, such as aligning to a single translucent layer on an IC wafer, some significant fraction of the imaged device must be treated as noise when aligning to the remainder.

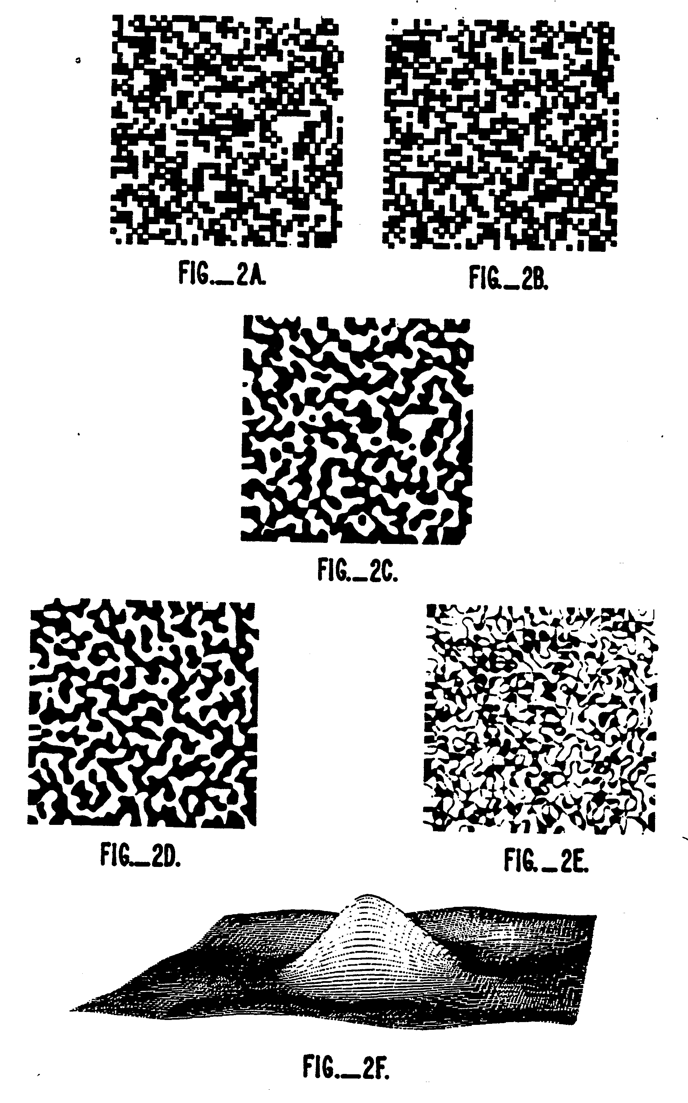

Figs. 2A-F illustrate a situation where the signal to noise ratio is 1:1. This noise level is characteristic of some of the more difficult process steps encountered in photolithography and is a serious challenge to conventional alignment techniques. Fig. 2A is a random dot pattern and Fig. 2B is the same pattern with half of its dots replaced with another random pattern, which simulates a situation with noise equal to the signal level. Figs. 2C-D are the sign patterns obtained by convolving the patterns of Figs. 2A-B respectively with a $\nabla^2 G$ operator with a center diameter (w) that is 2.3 times the dot size. Fig. 2E shows the locations where the patterns of Figs 2C-D differ. It can be seen from a close comparison of Figs 2C-D that the zero-crossing contours, namely the boundaries of the black regions, have little in common. However, only 25 percent of the area is actually different in sign and reasonable correlation still exists between the two filtered patterns. Fig. 2F plots the cross-correlation function obtained between the patterns of Figs 2C-D with a signal to noise ratio of 1:1. The noise brings the peak height down to half the height of the autocorrelation function shown in Fig. 1C, but it is still prominent and can be localized with subpixel resolution.

Correlation values are measured at integral-pixel disparities, but these measurements can be treated as samples from a continuous underlying function. The location of the peak of the underlying function can be calculated to subpixel precision by fitting a symmetric peak model to the integral correlation data. There are several approaches to finding the best fit. One approach fits measurements at five selected disparities to a conic model to obtain the following estimate of the peak position $(x_p, y_p)$ relative to the 5 measurements:

$$x_p = \frac{\psi(-1,0)^2 - \psi(1,0)^2}{2\psi(-1,0)^2 - 4\psi(0,0)^2 + 2\psi(1,0)^2} \qquad \ldots (5)$$

$$y_p = \frac{\psi(0,-1)^2 - \psi(0,1)^2}{2\psi(0,-1)^2 - 4\psi(0,0)^2 + 2\psi(0,1)^2} \qquad \ldots (6)$$

where

$$\psi(x,y)^2 = (\phi(x,y)-1)^2 \qquad (7)$$

and $\phi(x,y)$ is the raw correlation measurement at disparity $(x,y)$.

The resolution obtained by this method depends on the precision to which the correlation values can be measured. For noise-free images an approximate upper bound on the measurement's standard deviation for square correlation windows is:

$$\sigma \approx w/(2d)$$

where $d$ is the window diameter and $w$ is the center diameter of the $\nabla^2 G$ operator. Thus if the correlation window is 10w in diameter, the correlation measurement will have a standard deviation on the order of 5 percent or less.

Positioning a Tool Relative to a Workpiece

A first application of the alignment technique of the invention is directed to positioning a movable element relative to a fixed workpiece. An example to be described below is locating the exact position where an IC should be placed on a PCB by aligning to the traces in the vicinity of the IC placement sites.

As IC device technology has evolved, it has become increasingly critical that the IC be placed on the board with great precision. A standard method for navigating an IC placement tool over a PCB is to position the PCB accurately using mechanical stops or alignment fiducial marks, and then to move either the PCB or the placement tool using precision mechanisms whose accuracy is relied upon to achieve the desired relative positions and orientations. Such precision mechanisms are more expensive, slower, and more prone to breakdown than low-accuracy mechanical drives. The problem is aggravated in the case of large boards. The present invention requires only that the drive mechanism have enough long range accuracy to get the tool and the PCB approximately registered, and that the drive mechanism be precisely controllable over small distances.

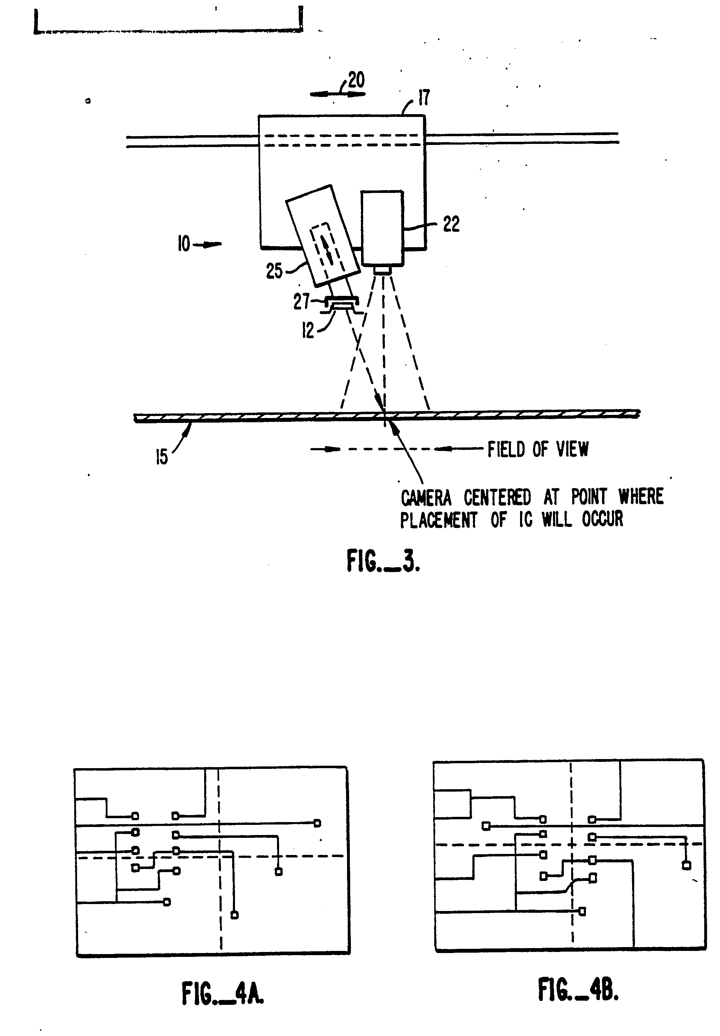

Fig. 3 is a simplified side view of apparatus 10 for mounting an IC device 12 at one of a number of placement sites on a circuit board 15. For simplicity, one-dimensional positioning is shown. A positioning head 17 is mounted for linear movement along an axis denoted by an arrow 20. The head carries a camera 22 and a placement actuator 25 which carries a device holder 27. The placement actuator and camera are oriented such that when the camera's optical axis intersects the nominal center of the placement site, actuator 25, when energized, places the IC with its center at that location. Clearly, various offsets are possible, as long as the relationship is known.

The procedure for placing IC 12 on PCB 15 is as follows. The CAD database for the PCB contains coordinates for the IC placement site, and these are communicated to the positioning mechanism which drives the tool head to the right vicinity, given the possibly limited long-range accuracy of the positioning mechanism, and the possibility of errors in positioning the board on the apparatus. Camera 22 provides a video image centered at the nominal placement site. This is shown schematically in Fig. 4A where the initial positioning results in the desired IC placement site being displaced to the left and above the nominal placement site in the center of the image. The placement actuator were it to be energized, would put the IC in the wrong place (namely at the center of the image). The apparatus must move the positioning head so that the image is centered on the desired IC placement site, as shown schematically in Fig. 4B.

The technique for determining the necessary additional displacement of the positioning head is carried out by correlating the camera image of Fig. 4A with a synthetic image from the CAD database. The resulting peak location is a numerical measure of the distance of the tool head from its desired location. Since this is a small increment, an instruction to move the tool head by that amount results in proper placement of the tool head. If the required displacement is larger than that which will guarantee placement to within tolerances, the procedure can be repeated and a new correlation, presumably with a much smaller displacement and required movement.

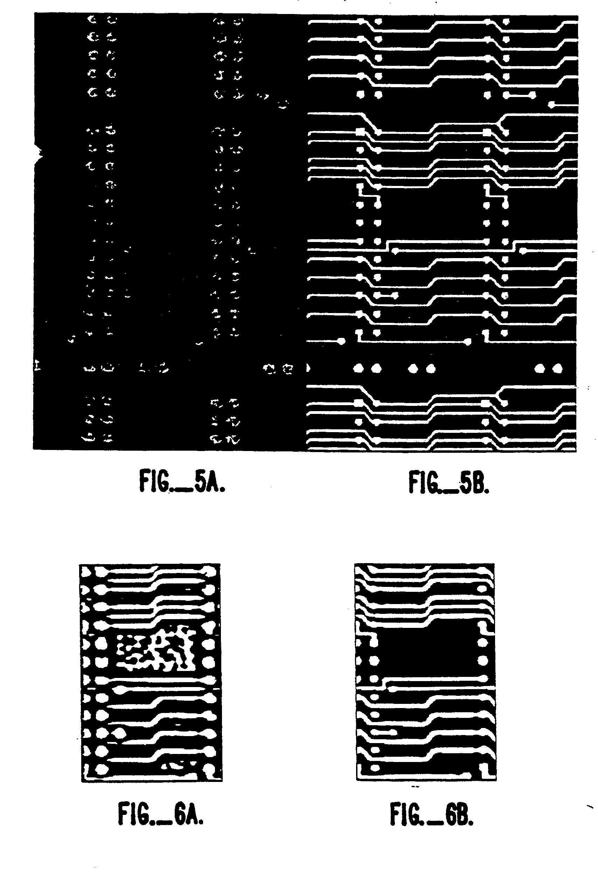

The following description of the procedure and experimental results relate to measuring the locations of several IC sites on a PCB using a camera mounted on a precision stage. Figs. 5A-B show a side-by-side comparison of the real grey-level camera image (on the left) and the binarized synthetic image of the matching region of the board (on the right). The synthetic CAD image was generated by the procedure described in Appendix 1. Note that the synthetic image was scaled, rather than the camera image being scaled. This is simpler in the sense that the need for bilinear resampling was avoided, but it is advantageous only because the database for a PCB is typically much smaller than that for an IC, and this allows relatively rapid generation of synthetic images.

Convolution techniques were used to perform filtering on both the camera image and the binarized synthetic image of the matching region of the board to obtain the sign bit of the Laplacian of the Gaussian of the camera image and the synthetic image, using the same scale of Gaussian. Figs. 6A and B show the results of the filtering and binarizing operation.

A correlation program was used to determine the position at which the synthetic image best aligned with the real image, and interpolation technique described above was used to obtain the alignments to subpixel precision.

The actual placement of the IC insertion points on the board were measured and the values compared to the nominal dimensions specified in the database, to generate an error value at each of the IC insertion points. The board was moved under the fixed camera by the use of a precision stepping x-y table, and a series of camera images were returned. By stepping the table in the nominal placement pattern of the IC locations, and correlating the real image at each location with the synthetic image from the database at the matching location, the difference between the nominal and measured locations of the IC insertion points was measured.

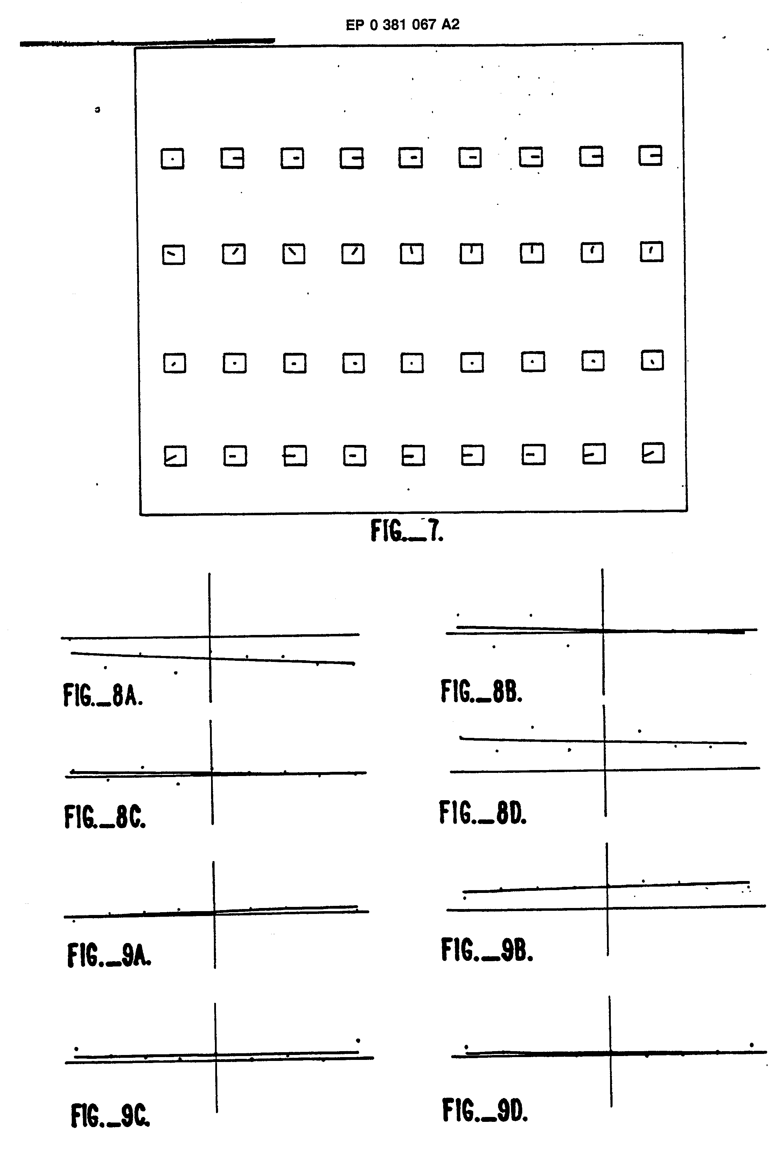

The results of this measurement are shown graphically in Fig. 7, as a map of the difference between the nominal and actual locations over a 6-inch by 6-inch area of the board. In the figure, each IC location is marked with a box. The measured error (difference between nominal and actual position of that section of the board traces) is indicated by a vector starting at the center of each box. The length and direction of the vector away from the box center indicates the magnitude and direction of the measured error, and the box provides a reference length of 1 pixel by 1 pixel, corresponding to approximately 0.005 inch in this case. The map shows that the errors are small (less than 0.7 pixel, or 0.0035 inch), as would be expected for a good-quality board.

It can be expected that such errors as are present could be approximated to a first order by a linear dependence of x-error (stetch) or y-error (rotation and orthogonality) as a function of x-position over the board. Figs. 8A-D and 9A-D show these errors plotted as graphs, with a best-fit linear approximation to the actual data points, for each row of IC insertion points as shown in the map of Fig. 7.

## Relative Alignment on Finished Product

A second application of the alignment technique of the invention is directed to the measurement of the relative alignment between parts of a completed (or partially completed) device that were placed in separate steps. One example is the alignment between two layers of metal tracks deposited on the surface of an integrated circuit. Another example is the alignment of a surface mount IC on a PCB. These will be described in order.

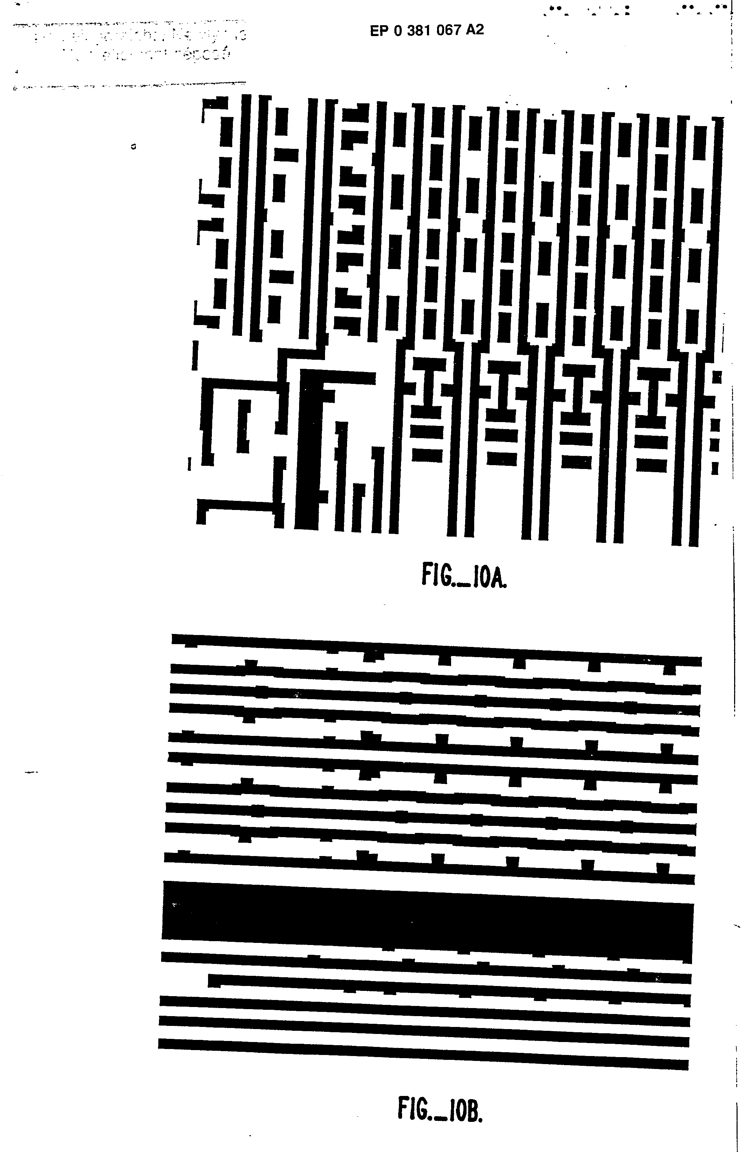

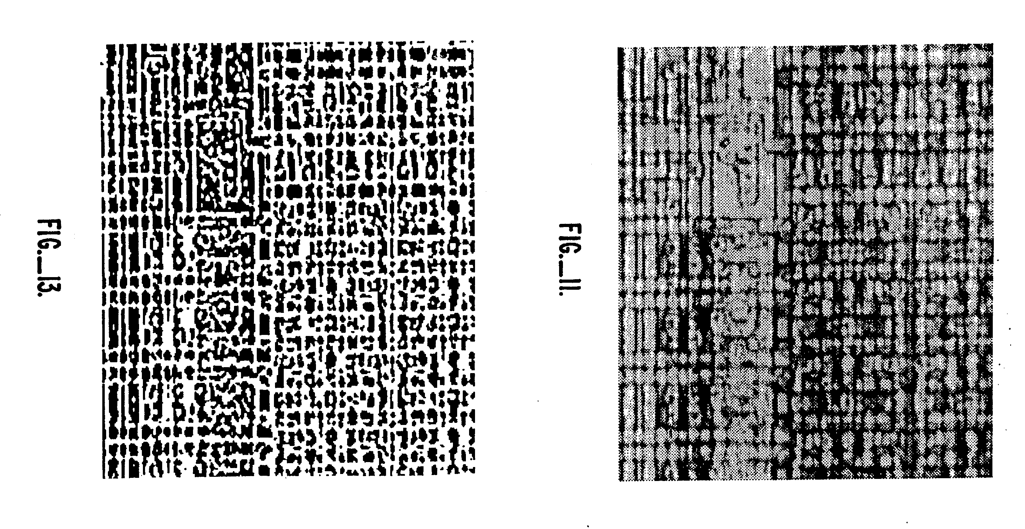

Figs. 10A-B show examples of synthetic images representing the metal-1 and metal-2 layers of a region of a chip, and Fig. 11 shows the image of the same region of the physical chip observed using a video camera attached to a microscope. The synthetic CAD images were generated by the procedure described in Appendix 2.

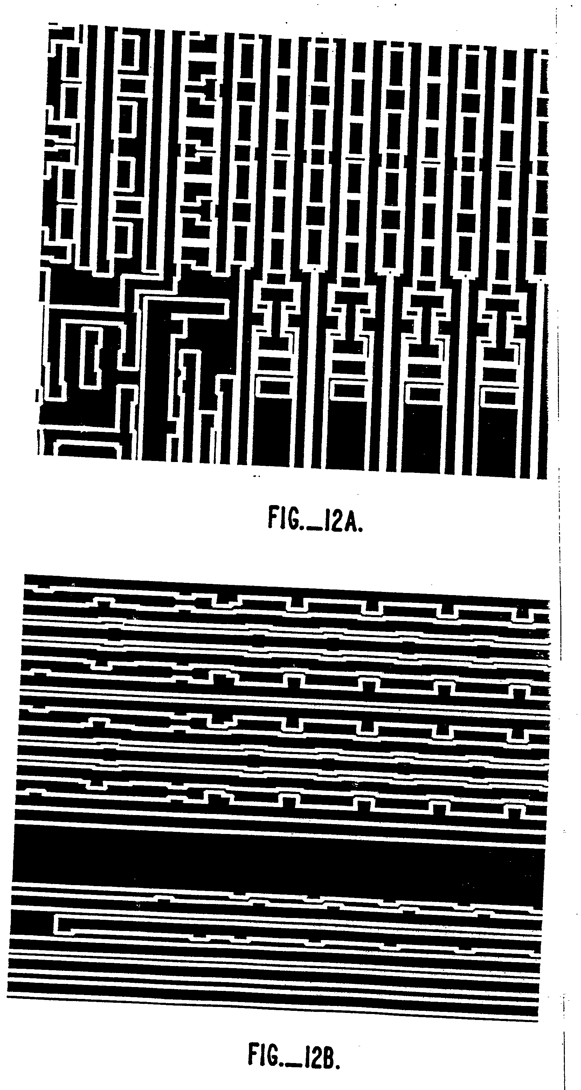

Image processing tools employing standard bilinear resampling techniques were used to scale the images acquired by the video camera through the microscope (at a known resolution) to the same scale as the synthetic CAD images. Convolution techniques were used to perform filtering on both the synthetic images and on the real image to obtain the sign bit of the Laplacian of the Gaussian of both the synthetic images and the real image, using the same scale of Gaussian. Figs. 12A-B show the sign of the filtered synthetic images, and Fig. 13 shows the sign of the filtered image of the physical device.

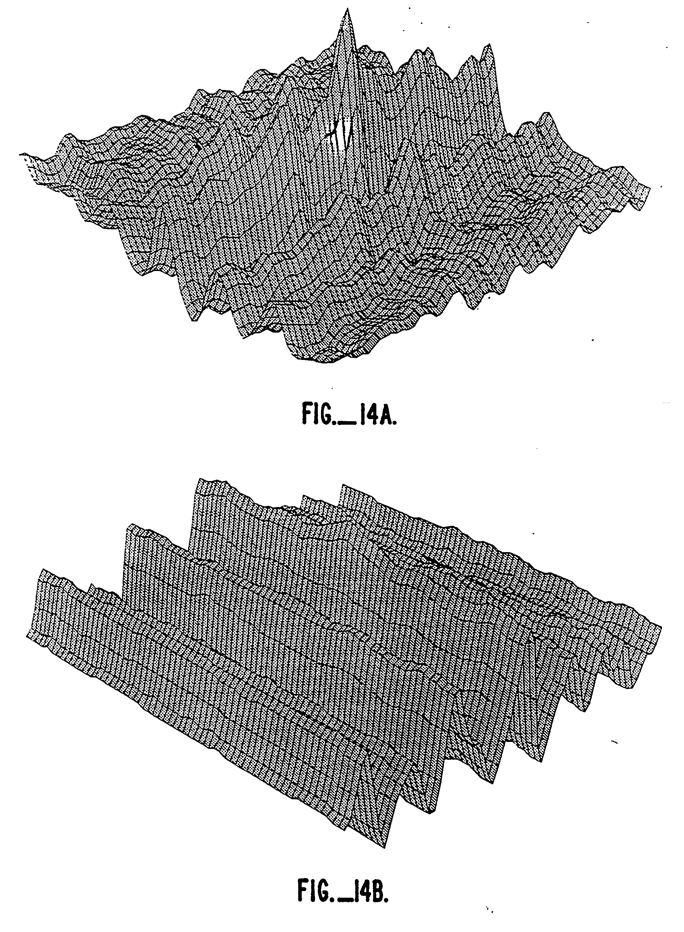

A correlation program was used to determine the position at which the synthetic images best aligned with the real image, and interpolation techniques were used to obtain the alignments to subpixel precision. Figs. 14A-B show the correlation results for the metal-1 and metal-2 layers respectively. The metal-1 results show a clear peak, from which an accurate measurement in both dimensions may be made. The metal-2 results, however, show a pronounced ridge, with a small peak. This is because there were very few features in the chip with vertical orientation in the metal-2 layer; so that there is very little for the correlation to key upon. However, the small peak, in spite of the noise, is still larger than any other noise peaks, and yields plausible results.

The method described above for estimating peak position to sub-pixel accuracy was used to obtain the alignment result. The alignment figures (against a nominal reference point) are given below (dimensions are in pixels, which are 0.5 microns):

| Layer | Alignment |
|---------|-----------------|
| metal-1 | (31.72, 29.87) |
| metal-2 | (31.80, 30.41) |

Subtracting these values gives a relative alignment between the two layers of (0.08, 0.54) in pixels, or (0.04, 0.27) in microns, which is within tolerance for this chip.

A second example is measuring the alignment of a surface mounted IC device relative to the PCB traces. This method includes the steps of: obtaining an optical image of the PCB including the part in question; generating a synthetic CAD image for the PCB in the vicinity of the part; filtering and binarizing the two images; determining the alignment between the processed CAD image for the PCB and the processed optical image; calculating from this alignment the exact location (in pixel coordinates) at which the IC device should be located based upon the positions of the PCB traces in the optical image; and determining the location of the IC device to ascertain whether the device is located in the proper position relative to the board traces.

The latter step could entail applying a conventional method (perhaps based upon edge finding, or casting of shadows by the IC device in low-angle illumination). Although it is in theory possible to determine the position of the device based upon a synthetic image of the device, using filtering and correlation, the device is typically too small for the method to work reliably - a larger image area is needed for accurate alignment.

Refinements

This technique is based upon the assumption that features observed in the image of the physical object, which are not represented in the CAD data for the object, are uncorrelated, and can be treated as noise. However, in some cases this is not the case. For example, in the image of the chip, the second metal layer is visible, and the polysilicon layer is also partly visible. In the case of a circuit board, the main noise source is the texture of the board substrate; however, parts which have been placed upon the board, or holes drilled in the substrate, may introduce an additional correlated noise source.

Fortunately, in the case of the chip, where the other layers should be is known as they are in the CAD database. Similarly, the expected position of the parts and holes on the circuit board are known.

A further aspect of the invention contemplates making an additional synthetic noise-feature image (or mask) containing representations of the positions of these other features, and using this image to suppress or mask pixels near the noise features from participating in the correlation. Such a mask image might be obtained by completing a binary image showing the noise features (holes and part positions on a circuit board, or other layers on an IC) and dilating that image by convolving with a disc shaped operator of diameter equal to a few standard deviations of the expected misalignment of the noise features from their nominal positions.

During correlation, pixels are compared only where the mask image (registered with the template) is zero. In this way the measurement is restricted to areas of the observed image where such noise features are not expected to be found, and therefore canot introduce a bias or error into the result. This masking operation is performed efficiently by the hardware described below by programming the offset table to omit describing points which are not enabled by the mask image.

In the case of the PCB alignment, the measurements were taken on a bare board, and the only extraneous features were the drilled holes at the center of each of the IC mounting lands. The results of the measurements show that these do not create large errors, presumably because they occupy a small fraction of the area of the total correlation window, and the Gaussian operator used was larger than these features so that the resulting smoothing effectively removed them. For other types of measurement this might not be the case, and the choice of the correlation window size and shape should be made to emphasize the desired features and de-emphasize potentially misleading data (associated with, or due to, a different manufacturing process, for example).

In the examples discussed so far, it has been assumed that the image observed from the physical object can be appropriately matched by a two level image created from the CAD database. In some cases, the physics of the imaging process may require a more complex template to be created.

For example, when observing a chip under dark field illumination, the steps between regions of the surface at different heights reflect light into the microscope, while the metal tracks do not. One way to build a model would be to model the way in which layers as described in the CAD database affect the surface height of the chip, in effect simulating the physical processes which were used to create the chip, in building a surface height map. Running a gradient operator over the surface map provides locations where high reflectivity might be expected, and the template is created from this data, as before, by performing the Laplacian and Gaussian filtering and taking the sign image.

Other physical effects which might need to be considered include the possibility of specular reflections which saturate the camera and blank out features of interest, and the effects of camera and optical distortion changing the observed image.

Electronics Hardware Implementation

In many instances, the practicality of the above applications of the image matching techniques is tied to the speed at which the required computations can be carried out and the cost of achieving that speed. The above examples make use of $V^2G$ convolutions with operator sizes on the order of 22 by 22 pixels. A brute force implementation of this computation would involve something like 484 multiply-add operations per pixel. Thus filtering a standard 512 by 512 image would require over 100 million multiply add operations. Carrying this out at video rates would require a super-computer capable of some 3 billion multiply-add operations per second. In the early days of research in this area, such computations required hours on mainframe computers. Present software implementations do the same work in a few minutes, which is still too slow for routine industrial applications.

The hardware described below includes a $V^2G$ convolver and a correlator that does five 1000-point correlations in parallel in 100 µs and allows the points correlated to be specified on a pixel by pixel basis. The hardware thus performs the massive computation at video rates, and can be implemented on just three standard multibus boards constructed with off-the-shelf parts no more complex than 4-bit adders. The following techniques are key to accomplishing this acceleration:

(a) the separability of the Gaussian is exploited to reduce an N by N convolution operator to a cascade of an N-by-1 convolution followed by a 1-by-N convolution;

(b) a binomial approximation to the Gaussian is used to eliminate the need for multiplication;

(c) the sampling theorem is invoked to allow exponential scaling of the operator size with only linear growth in the computation; and

(d) the Laplacian is applied first to create a zero-mean signal, the variance of which decreases in a predictable manner when smoothed by a Gaussian allowing efficient use of limited precision arithmetic.

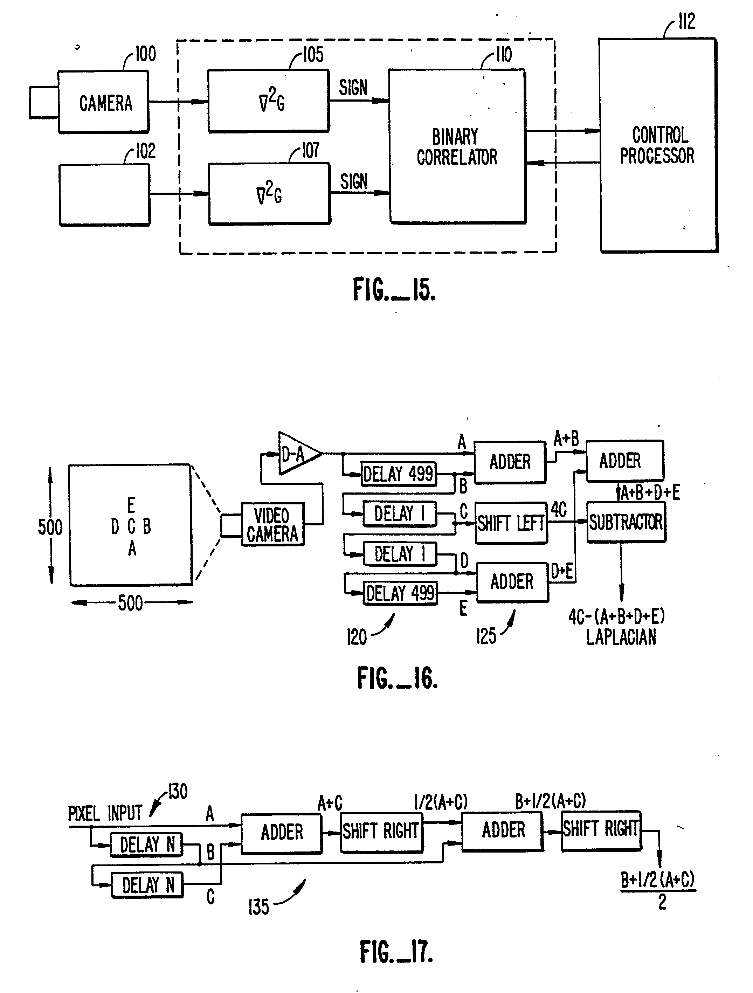

Fig. 15 is a block diagram showing the basic hardware configuration. A video camera 100 and a CAD image generator 102 communicate their data streams to respective convolution circuits 105 and 107. The sign outputs are communicated to a binary correlator 110. A control processor 112, interfaced to the system over a low bandwidth link, controls correlator 110 and receives and interprets correlation measurements. In practice, the Laplacian of Gaussian filtering on the synthetic CAD image would be performed off-line, in software, and thus the second convolution circuit 107 would not be required. The experimental hardware is implemented using FAST TTL parts on wire-wrapped multibus boards. One board contains a Laplacian convolver; a second type of board contains a Gaussian convolver, of which there are several instances; a third board contains the correlators.

The circuitry for performing the Laplacian operation is implemented as a 3-by-3 convolution as shown in Fig. 16. A video signal from camera 100 is digitized to produce a digital raster signal which is passed into a cascade of four delay modules 120. Two of these modules delay their inputs for a single pixel clock and the other two introduce delays one less than the number of pixels on a line from the camera. The combination obtains five parallel samples from a cross shaped region of the image. This pattern of samples moves over the image one pixel position to the right with each pixel clock and it wraps around at the end of the image in raster fashion.

The five parallel samples, designated A through E, are supplied to an adder tree 125 configured to calculate the 3 by 3 discrete approximation to the Laplacian, $4C-(A+B+D+E)$. The resulting Laplacian raster signal is output to the Gaussian convolver which follows in the pipeline.

Fig. 17 shows circuitry for computing a two-dimensional Gaussian convolution of the Laplacian raster signal. One pleasant property of multiple-dimensional Gaussian convolutions is that they can be decomposed into a cascade of one-dimensional Gaussian convolutions, thereby greatly reducing the size of the computation for large operators. Consider first the problem of efficiently computing a one-dimensional Gaussian convolution. One consequence of the Law of Large Numbers (the Central Limit Theorem) is that sufficiently many repeated applications of a simple one-dimensional boxcar smoothing filter yields a close approximation to a one-dimensional Gaussian convolution. The circuitry is implemented as a simple 3-point filter with binomial weights of 1/4, 1/2, 1/4. This is the effect of two passes of a boxcar filter with weights of 1/2, 1/2. As with the Laplacian filter, delay modules 130 are used to create three parallel samples from the raster input which are fed to an adder tree 135 with appropriate shifts to achieve the indicated scaling. It should be noted that the data values here are signed numbers so shifting bits to divide by 2 may require the addition of a carry bit to the prior addition to prevent round off bias.

Delay elements 130 are variable delay modules allowing delays from 1 pixel to several times the line length of the image. Setting the delays to 1 pixel each creates a 3-point horizontal filter. Setting the delay to the line length creates a 3-point vertical filter. Other choices for the delays are also useful and will be discussed in a later section.

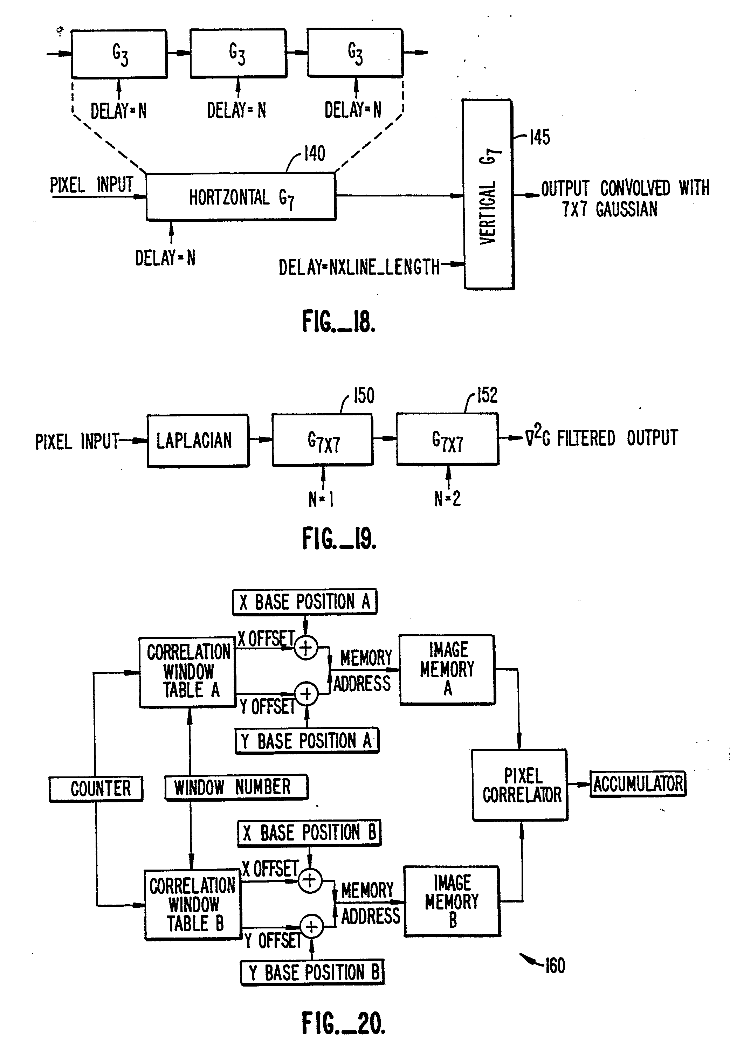

Fig. 18 shows the circuitry for computing a 7-point Gaussian. Application of a cascade of three $G_3$ filters in series all using the same delay creates the effect of convolution with a 7-point binomial distribution, ("$G_7$ filter"). This size produces a fairly close approximation to a one-dimensional Gaussian. Experience has shown that a $G_7$ filter reduces the amplitude of a Laplacian signal by about a factor of 2 so one bit of down shifting is eliminated at the end of the last $G_3$ element in the $G_7$ module. This keeps the numbers fairly well normalized in the pipeline. 16-bit integer arithmetic is sufficient; 12-bit arithmetic at a minimum is required. Two such 7-point Gaussian filters 140 and 145, with one set up as a horizontal Gaussian and the other as a vertical Gaussian yield a two-dimensional 7-by-7 Gaussian filter, $G_{7x7}$, when the delay parameter N is set to 1.

Many applications require Gaussian filters much larger than the 7-by-7 Gaussian filter, $G_{7x7}$, described above. A bigger filter can be constructed by cascading additional $G_{7x7}$ modules together. However, this is not cost effective with the simple $G_{7x7}$ modules since for each factor of 2 increase in filter diameter, the hardware would have to be quadrupled in size. A more efficient approach makes use of the fact that the first $G_{7x7}$ convolution low-pass filters the input sufficiently to allow sampling only every other pixel with no appreciable aliasing. Thus every other element of a subsequent 14-by-14 Gaussian filter can be set to zero with no significant loss. A 14-by-14 Gaussian filter with alternate elements set to zero is obtained from the $G_{7x7}$ module with its delay parameter, N set to 2. Fig. 19 shows a $\nabla^2 G$ filter incorporating two $G_{7x7}$ modules 150 and 152 in this manner. Further $G_{7x7}$ modules can be added with N set to increasing powers of 2 to achieve further doublings of the operator size.

The $G_{7x7}$ hardware module described above was implemented on a single standard multibus board using 16-bit precision in all computations. FAST TTL logic parts allow conservative operation at a 10 MHz pixel rate.

Fig. 20 shows a hardware correlator 160 that allows configurable correlation windows. Correlation of $\nabla^2 G$ sign arrays can be efficiently implemented in hardware using high speed static RAMs as image buffers -a single 64K-by-1 chip buffers a 256-by-256 array of $\nabla^2 G$ sign bits. Additional static RAMs can be used as tables specifying a large set of pairs of x,y coordinates which together define a correlation window. A common index generator, shown as a counter, addresses the A and B correlation window tables which store (x,y) pairs of window offsets. These two tables store identical offsets when translation disparities are to be measured between the two image regions correlated. The table memories can be made large enough to hold many window definitions at a time and the window number register is used to select the desired window for a particular correlation. Each table outputs x and y offset values which are added to a base position to set the overall position of the window on the image. The values in these registers are also adjusted to cancel any translation disparities that exist between the A and B images at the window position. The resulting x and y positions together form an address which is sent to the image memory buffers. The image buffers output pixel values which are correlated and the result is added into an accumulator. The image memories are loaded with the sign bit of Laplacian of Gaussian filtered intensity images and the correlator is an XOR gate.

The hardware correlator, as implemented, is fairly simple and uses standard TTL FAST parts on a wire-wrapped multibus board. The design follows Fig. 19, except that there are five instances of the "B" side of the correlator running in parallel. This allows five correlations to be carried out in parallel against a single window defined by the "A" side of the correlator. The image memories are 64K-by-1 static rams and are dual ported (stores of sign bits from the $\nabla^2 G$ convolver are interleaved with accesses by the correlator). The hardware runs at a 10 MHz pixel rate which means that five 1000-point correlations are done in 100 $\mu$s plus the multibus overhead for starting the correlator and reading back results.

## Conclusion

In conclusion it can be seen that the present invention provides a simple technique for correlating CAD images with images of the devices made from them. The technique is largely immune to noise and requires few adjustments.

While the above is a complete description of the preferred embodiment of the present invention, various modifications, alternative constructions, and equivalents may be used. While specific applications were discussed above, the invention finds additional utility, as for example alignment of scanning electron microscope ("SEM") voltage contrast images and probe positioning for SEM measurements. These will be outlined below.

An SEM can be used to form an image of an IC. When the circuit is powered and running, the conductors at high voltage reflect electrons brightly, while conductors at low voltage and the IC substrate are effectively invisible. The synthetic image contains all the conductors that might be visible, and treats the absence of those conductors that are not at a high voltage in the observed image as noise. An alignment is obtained between the image and the database. If two different images are obtained, one from a known good circuit, and one from a circuit which is malfunctioning, and are to be compared, they can both be registered to the database, which will reveal their alignment relative to each other. A simple substraction of one image from the other, at the appropriate alignment, will then reveal the contrast between the conductors which are not the same in the images of the good and malfunctioning circuits.

In a similar situation, with an SEM forming an image of an integrated circuit under operation, the SEM can be instructed to probe a single spot of the integrated circuit rather than scan the entire region of the image, to obtain a time varying trace of the signal at that point. An operator might indicate the connection to be probed on a schematic diagram of the circuit; this is linked to the data describing the physical connections in the database, and hence can be turned into coordinates in model space, but in order to relate this to beam position on the microscope, a registration between the observed image of the circuit and the database is required. In this case, the system could build a synthetic image of part of the circuit near the point to be probed, and perform a registration (using the method described above) on the scanned image to identify the exact position to be probed in acquisition mode.

Additionally, while the filtering of the images was described above in terms of Laplacian and Gaussian convolution operations, other high pass and low pass filtering techniques can be used. Indeed the preferred hardware uses a 3-by-3-point discrete approximation to the Laplacian and a binomial approximation to the Gaussian. Alternatively, the Laplacian of Gaussian can be approximated by a difference of Gaussians.

Moreover, while the correlation was described as being performed on binarized (hard-clipped) filtered images, other non-linear operations could be used in place of the binarization.

Therefore, the above description and illustrations should not be taken as limiting the scope of the present invention which is defined by the appended claims.

## Appendix 1 - PCB CAD Image

A design file for PCB trace geometry may conform to a variety of standards: in the case described above, the file was in Gerber format, in which the geometry is specified as motions of an exposure head relative to a recording film. The exposure head creates an image of a selectable aperture, and this image is moved over the recording film to selectively expose regions of the film in the desired geometry. The apertures are typically circular or square, to create lines and their terminations, but may be more complex,

EP 0 381 067 A2

to create special shapes such as logos or alignment fiducial marks.

Since the apertures can be physically changed in the exposure head, to allow the efficient creation of the geometry required by a specific job, it is necessary to use both the main database and the aperture selection table which would be used with that database, to create a synthetic image mimicking the actual board geometry.

Software was written to read the Gerber database file and the aperture selection table, and to create synthetic images as binary two-dimensional pixel arrays. The software provided for setting image scale factors independently on the orthogonal axes, and for offsets on these axes, so that the synthetic images could be scaled and placed to match the real board images from the camera. It is important to note that the synthetic images were binary, i.e. consisted of black or white values only. This allows the software for generating the synthetic images to be simple and fast compared to that which would be needed to create grey-level images by modeling the effects of illumination, board color, and camera spectral response.


Appendix 2 - IC CAD Image


The particular CAD database used in this example consists of a file containing a list of geometrical features such as rectangles and polygons, with sizes and positions of such features on different layers of the chip. The CAD database is expressed in hierarchical form: a set of features which make up a 'cell' is described once, and then that cell may be invoked within another larger cell definition. The complete chip may then be considered as simply the root cell in the hierarchy of cell definitions.

Each cell has its own coordinate system as it is being defined. When a cell is invoked in the definition of a parent cell, a set of mathematical transforms (affine transforms) involving translation, reflection, rotation, and scaling specify how the features of the cell being invoked are mapped into the cell being defined. Such a set of transforms may be specified in the form of a homogeneous matrix, which multiplies the coordinates of the untransformed features to yield the coordinates in transformed space. When the newly defined cell is in turn invoked in the definition of a higher cell in the hierarchy, another set of transformations is applied. Thus the placement of basic geometry in the root cell definition is subject to a set of transforms which may be expressed as the product of each of the matrices for the individual cells.

A software program normally used for generating raster pictures of the CAD data for the chip on a color plotter was modified to generate a raster image to be used as a template for the matching process. This program reads in the CAD data, forming a representation of the cell definitions and transforms required to map each cell into the coordinate system of its parent cell. A description of the appearance of each layer in terms of its color in the output image is also read in. A raster image array is allocated and cleared to a background value, and the geometry specified by the root cell is drawn into the array, item by item.

An initial transform matrix maps the coordinates of the root cell into the coordinates of the image array. If an image of only part of the entire database is desired, this may be expressed in the scaling and transformations of this transform matrix. As cells lower in the hierarchy are invoked in the description of the root cell, the current transformation matrix is copied, multiplied by the transformation matrix for the cell being invoked, and pushed onto the stack, becoming the current transform. When basic geometry is invoked, it is transformed according to the current transform, which expresses all the transforms to map the geometry through all its parent cells to the coordinate system of the root cell and finally to the coordinate system of the image array. If the geometry falls inside the area of the image array, then pixels falling within the area described by the geometry are colored according to the description of the appearance of the layer of the geometry. When all the geometry and lower cell invocations of a particular cell have been examined, and appropriate pixels on the image array have been colored, that cell's invocation is completed, and the current transform is popped from the stack, leaving the transform matrix which was in force when the parent cell of the current cell was being examined. By controlling the pixel values written for each of the layers, images can be generated depicting the appearance of any single layer of the chip, or any combination of the layers.


**Claims**

1. A method of determining the correspondence between a manufactured device and the CAD model that was used to make it, comprising the steps of:
generating a synthetic CAD image from the CAD database corresponding to at least a portion of the device;

11

filtering the CAD image to provide a filtered CAD image;

generating an actual image of the manufactured device;

filtering the actual image to provide a filtered device image; and

correlating the filtered CAD image and the filtered device image to provide a relative displacement therebetween.

2. The method of claim 1 wherein at least one of said filtering steps includes high pass and low pass filtering.

3. The method of claim 1 wherein at least one of said filtering steps includes performing Laplacian and Gaussian convolutions of the image.

4. The method of claim 1, and further comprising the steps, carried out before said correlating step, of:

binarizing the filtered CAD image; and

binarizing the filtered device image;

wherein said step of correlating is performed on the binarized versions of the filtered CAD image and the filtered device image.

5. A method of determining the relative placement of two parts of a device manufactured to conform to a CAD database where the two parts were incorporated into the device during different manufacturing steps, comprising the steps of:

generating from the CAD database a first CAD image representing the first part of the device;

filtering the first CAD image to provide a first filtered CAD image;

generating a device image of the manufactured device showing both parts incorporated thereinto;

filtering the device image to provide a filtered device image;

correlating the first filtered CAD image with the filtered device image to obtain the location of the first part;

determining the location of the second part of the device; and

comparing the locations of the first and second parts to determine relative alignment.

6. The method of claim 5 wherein said determining step includes the substeps of:

generating from the CAD database a second CAD image representing the second part of the device;

filtering the second CAD image to provide a second filtered CAD image; and

correlating the second filtered CAD image with the filtered device image to obtain the location of the second part.

7. The method of claim 5, and further comprising the steps, carried out before said correlating step, of:

binarizing the filtered CAD image; and

binarizing the filtered device image;

wherein said step of correlating is performed on the binarized versions of the filtered CAD image and the filtered device image.

8. A method of establishing a desired relative position between a camera and an article nominally conforming to a CAD database, comprising the steps of:

establishing an approximate desired relative positioning between the camera and article;

generating an actual image of at least a region of the article with the camera and article in the approximate desired relative positioning;

generating a CAD images based on the CAD database, of at least a region of the article;

filtering the actual image to produce a filtered actual image;

filtering the CAD image to produce a filtered CAD image;

correlating the filtered actual image and the filtered CAD image to determine a relative displacement; and

establishing relative movement between the camera and the article by the relative displacement to approach the desired relative position.

9. The method of claim 8, and further comprising the steps, carried out before said correlating step, of:

binarizing the filtered CAD image; and

binarizing the filtered actual image;

wherein said step of correlating is performed on the binarized versions of the filtered CAD image and the filtered actual image.

FIG._IA.

FIG._IB.

FIG._IC.

FIG.__2A.

FIG.__2B.

FIG.__2C.

FIG.__2D.

FIG.__2E.

FIG.__2F.

EP 0 381 067 A2

FIELD OF VIEW

CAMERA CENTERED AT POINT WHERE
PLACEMENT OF IC WILL OCCUR

FIG.\_3.

FIG.\_4A.

FIG.\_4B.

FIG.__5A.

FIG.__5B.

FIG.__6A.

FIG.__6B.

FIG.__7.

FIG.__8A.

FIG.__8B.

FIG.__8C.

FIG.__8D.

FIG.__9A.

FIG.__9B.

FIG.__9C.

FIG.__9D.

FIG.—10A.

FIG.—10B.

FIG.__II.

FIG.__I3.

FIG._I2A.

FIG._I2B.

FIG.__14A.

FIG.__14B.

FIG.__I5.

FIG.__I6.

FIG.__I7.

DELAY=N                DELAY=N                DELAY=N

G₃    →    G₃    →    G₃    →

PIXEL INPUT    ⟋140
→    HORTZONTAL G₇    →

VERTICAL G₇    ⟋145
→ OUTPUT CONVOLVED WITH 7X7 GAUSSIAN

DELAY=N

DELAY=NXLINE_LENGTH →

FIG.__18.

PIXEL INPUT →  LAPLACIAN  →  G₇X₇  →  G₇X₇  → ∇²G FILTERED OUTPUT

150        152

N=1        N=2

FIG.__19.

X BASE POSITION A

CORRELATION WINDOW TABLE A

X OFFSET ⊕

MEMORY ADDRESS

IMAGE MEMORY A

Y OFFSET ⊕

Y BASE POSITION A

COUNTER        WINDOW NUMBER

PIXEL CORRELATOR → ACCUMULATOR

X BASE POSITION B

CORRELATION WINDOW TABLE B

X OFFSET ⊕

MEMORY ADDRESS

IMAGE MEMORY B

Y OFFSET ⊕

Y BASE POSITION B

⟍160

FIG.__20.